# EUROPEAN PATENT SPECIFICATION

(11) **EP 3 141 778 B1**
(45) Date of publication and mention of the grant of the patent: **03.06.2020**
(21) Application number: 15788808.2
(22) Date of filing: 28.04.2015
(51) Int. Cl.: F16H 55/56, F16D 43/14, F16H 57/04

(54) **AXIAL TRANSMISSION SYSTEM**
AXIALES ÜBERTRAGUNGSSYSTEM
SYSTÈME AXIAL DE TRANSMISSION

(30) Priority: 09.05.2014 ES 201430682
(43) Date of publication of application: 15.03.2017
(73) Proprietor: Automatic Transmission & Innovation, S.A., 08320 El Masnou (ES)
(72) Inventor: PALLARÈS MATEOS, Xavier, 08338 Premià de Dalt, Barcelona (ES)
(74) Representative: Gallego Jiménez, José Fernando
(86) International application number: PCT/ES2015/070350
(87) International publication number: WO 2015/169991

(56) References cited:
- EP-A1- 2 522 872
- WO-A1-2009/096385
- WO-A1-2009/128107
- DE-U1- 20 317 267
- ES-A1- 2 222 052
- ES-A1- 2 222 052
- ES-U- 1 069 285
- FR-A1- 2 502 720
- US-A- 4 493 677
- US-A- 5 101 924
- US-A1- 2007 105 670
- US-A1- 2007 105 670

## Description

### Object of the Invention

The present invention relates to a device that has been especially designed to form an axial transmission system that considerably improves the performance of current variable speed drives.

The object of the invention is to provide an inertial axial transmission system in which an exponential speed variation takes place depending on the movement caused by the inertia of the device and having a structure such that it prevents performance loss due to movements of some of its internal parts due to said inertial effect in directions that do not provide the device with any functionality.

### Technical field of application

The invention can be applied in the field of automatic transmissions for either two-stroke or four-stroke engines, although it can also be applied in other fields, such as in automatic transmission systems, including electric vehicles and bicycles.

### Background of the Invention

In the scope of practical application of the invention, variable speed drive devices such as variable speed cam drives, variable speed roller drives, or variable speed ball drives, all of them having the common denominator of the enormous difficulty involved in servicing the engine transmission.

Patent document P200003019 discloses a variable speed cross drive, designed for any automatic engine, which consists of a variable pulley for V-belts, comprising two smooth frustoconical discs, between which there is formed a groove in which a V-belt is directly applied, having a disc-shaped plate, the entire assembly being coaxially mounted and secured to the rotational shaft of a driving shaft, the disc-shaped plate and a first disc being stationary and a second disc being mobile in the axial direction of the shaft due to its own inertia.

The device defines a variable pulley through means for movement of the mobile disc, suitable for gradually moving the latter closer to the stationary disc as the rotational speed of the assembly increases, the width of the pulley groove decreasing and therefore increasing the pitch diameter of the pulley, and vice versa, so the effective radius on which the transmission torque is applied, and accordingly the speed on the element actuating the other end of said belt, vary.

More specifically, in said patent the means for axial movement consist of a number of masses or sliders that are arranged with their axes inclined several degrees with respect to the driving shaft and can be moved axially with respect to said driving shaft. They are radially and uniformly distributed, housed in holes machined on the outer face of the mobile disc facing the disc-shaped plate and encased between the mobile disc and the disc-shaped plate, all of which is suitable such that, for zero or low rotational speed of the assembly, the sliders are located entirely inside their holes and the mobile disc is in the position farthest away from the stationary disc, moving from inside their holes towards the disc-shaped plate, according to the rotational speed, and pushing the mobile disc towards the stationary disc, thereby reducing the separation distance between both discs and reduces the width of the pulley groove, increasing the pitch diameter thereof.

This structure performs the function for which it was envisaged, but it has a series of drawbacks in the following aspects: the masses have a cylindrical configuration, enabling them rotate in their housings, carrying out angular or rotational movement, which involves energy that is not utilized. Furthermore, this rotational possibility of the masses that can be moved means that they will gradually be sharpened, forming a tip hindering their movement on the disc-shaped plate.

Another drawback of this device is determined by the intense friction generated during operation, negatively affecting its service life and leading to excessive heating.

In addition to these drawbacks, the drive wheel is associated with a pulley that has a specific, and accordingly invariable profile, such that the radius of action of the belt on said pulley is always the same, such that the torque that must be overcome to initially move the wheel is significantly greater than when it is in motion, so it would be desirable to have means that allowed regulating the radius of action of the belt on the drive wheel depending on the angular speed at which the latter is moving.

There are other existing documents, such as: US 5101924 A; ES 1069285 U and WO 2009096385 A1, which disclose transmission systems with variable-pitch pulleys that allow varying the system input-output speed ratio. These documents describe features of the type included in the preamble of claim 1 of this invention.

### Disclosure of the invention

The axial transmission system proposed by the invention is of the type described in the preamble of claim 1.

This system has features that seek to solve a series of problems in a fully satisfactory manner as a result of a highly effective and novel structure involving both the driving pulley associated with a drive shaft or crankshaft or driving shaft, and the driven pulley associated with an output shaft, thereby achieving a greater reduction in starting torque and higher speeds when the system is in motion, resulting in greater acceleration and optimal utilization of the energy supplied to the driving pulley.

To achieve the proposed objectives, a feature of the invention consists of the features of claim 1.

The inertial movement of said masses, which are encased between the mobile disc of the driving pulley and said bell-shaped cover, means that for zero or low rotational speed of the drive shaft, the sliding masses are located entirely inside the respective housings and the mobile disc is in the position farthest away from the stationary pulley, defining a wide groove in which the belt tends to reach the minimum radius allowed by the device.

When the rotational speed of the drive shaft increases, said masses tend to move out of the housings as a result of their own inertia, coming into contact with the inner face of the bell-shaped cover and causing the movement of the mobile disc of the drive belt in the direction moving it closer to the stationary disc, which reduces the distance between both discs and accordingly narrows the groove of the driving pulley, causing the transmission belt to move towards to the outside of the driving pulley, increasing the radius of curvature and accordingly varying the driving pulley-driven pulley rotational speed ratio.

The non-cylindrical configuration of the housings and the respective masses that can be moved inertially prevents said masses from rotating inside the housings, avoiding wear along the perimeter thereof by coming into contact with the bell-shaped cover, whereby the end of said masses develops a tip configuration.

Therefore, this feature that prevents the masses from rotating inside the respective housings assures suitable contact between the masses and the bell-shaped cover and reduces losses of energy due to friction.

Unlike the background documents mentioned in this invention, there is no contact between the bell-shaped cover and the stationary disc of the driving pulley, rendering the use of guides for centering purposes unnecessary.

According to another feature of the invention, it has been envisaged that at least one of the discs of the driving pulley has a variable-radius curved generatrix on the face forming the contact surface with the belt, such that an exponential change, instead of a linear change in speed is achieved, working at all times with the radius which is best suited for optimizing system response, allowing a larger V-belt path with a smaller device height.

This system has features that seek to prevent the working temperature of the driving pulley from being increased too much due to the masses that can be moved rubbing against the bell-shaped cover and to prevent dirt from being able to enter and build up in the area where said bell-shaped cover comes into contact with the masses.

To that end and according to the invention, the driving pulley comprises inside the bell-shaped cover a fan that helps cool the system, helping to eliminate the heat produced by friction.

The arrangement of this fan inside the bell-shaped cover, specifically between said bell-shaped cover and the disc that can be moved of the driving pulley, expels any impurity that may get into the space comprised between the bell-shaped cover and said mobile disc of the driving pulley, keeping the area in which the masses that can be moved come into contact with the bell-shaped cover clean.

To further favor cooling of the driving pulley, it has been envisaged in this invention that the mobile disc of said driving pulley comprises cooling grooves on its front face on the perimeter thereof.

In turn, the driven pulley has a stationary disc secured to an output shaft and a mobile disc provided with means for movement in the axial direction and as a result of its own inertia with respect to the output shaft.

These means for movement of the mobile disc of the driven pulley in the axial direction with respect to the output shaft comprise a tubular neck mounted on the output shaft, said tubular neck being provided with two groups of oblique notches with different angles of inclination for optionally inserting lugs for integrally securing same to the output shaft.

The possibility of inserting the lugs in the oblique notches that have more or less inclination allows the mobile disc of the driven pulley to move as a result of its own inertia with respect to the lugs, guided by the oblique notches used in each case offering the system two limit working positions corresponding precisely with the upper and lower ends of said notches, such that in one of said limit positions of the mobile disc, the driven pulley provides a maximum radius for supporting the belt, offering high torque at low speeds; whereas in the other limit position of the disc that can be moved, the driven pulley provides a minimum radius for supporting the belt and accordingly the maximum rotational speed of the driven pulley and of the output shaft.

In this invention, it has been envisaged that the number of notches of the tubular neck is twice the number of lugs that can be coupled in the output shaft, such that the notches having different inclinations form two alternating or angularly offset groups, which enables mounting the lugs on the tubular neck of the mobile disc of the driven pulley in the group of notches having more or less inclination for the purpose of obtaining a higher torque or a faster change in speed, depending on the specific needs of each application.

It has been envisaged that the disc that can be moved of the driven pulley is aided by an elastic element which tends to keep it in the position in which it moves closest to the stationary disc of said driven pulley when rotational inertia is not enough.

### Brief description of the drawings

To complement the description that will be provided below and for the purpose of aiding to better understand the features of the invention according to a preferred practical embodiment thereof, a set of drawings is attached as an integral part of said description in which the following is depicted with an illustrative and non-limiting character:
Figure 1 shows a plan view of an embodiment of the axial transmission system according to the invention in which the transmission belt is sectioned to allow seeing the driving pulley and the driven pulley.
Figure 2 shows an exploded perspective view of the driving pulley.
Figures 3 and 4 shows respective partial elevational views of the driving pulley sectioned along a vertical plane, and in which the mobile disc is depicted in two end positions of movement in the axial direction.
Figures 5 and 6 shows respective elevational views of an embodiment of the driven pulley, and in which the disc that can be moved is depicted in two end positions of axial movement with respect to the output shaft.
Figure 7 shows a perspective view of the mobile disc of the driven pulley, in which the two groups of notches with different inclinations, defined in the tubular neck thereof, can be seen.

### Detailed description of a preferred embodiment

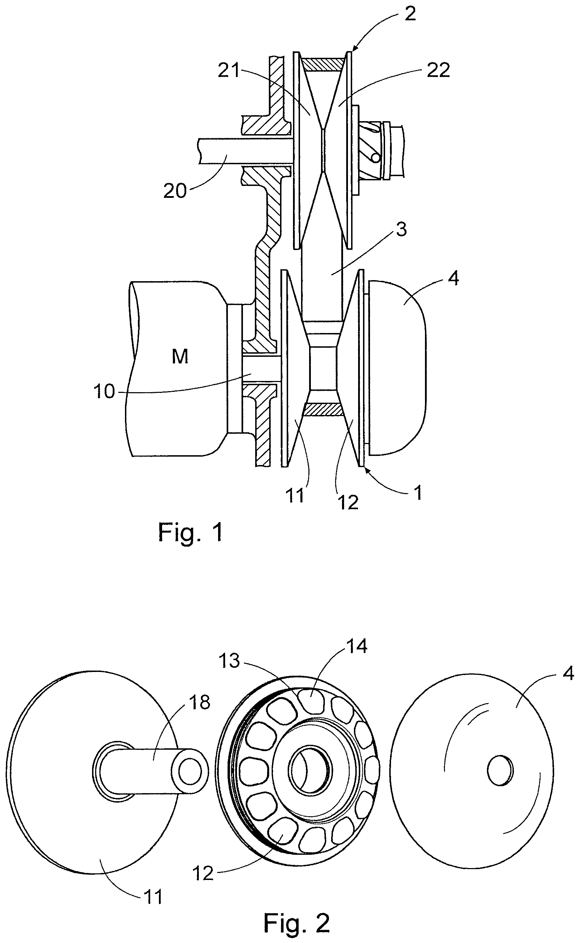

In the embodiment shown in Figure 1, an embodiment of the system of the invention can be seen, including a driving pulley (1) mounted on a drive shaft (10) operated in this case by a motor (M) and a driven pulley (2) mounted in this case on an output shaft (20), both the driving pulley (1) and the driven pulley (2) being associated by a V-belt (3).

The driving pulley (1) consists of a stationary disc (11) and a mobile disc (12) provided with axial movement along the drive shaft (10); the driven pulley (2) likewise has a stationary disc (21) secured to the output shaft (20) and a mobile disc (22) that can be moved in the axial direction by its own inertia with respect to the output shaft (20).

The axial movement of the mobile discs (12, 22) of the driving and driven pulleys allows the system to vary the drive shaft (10)-output shaft (20) speed ratio.

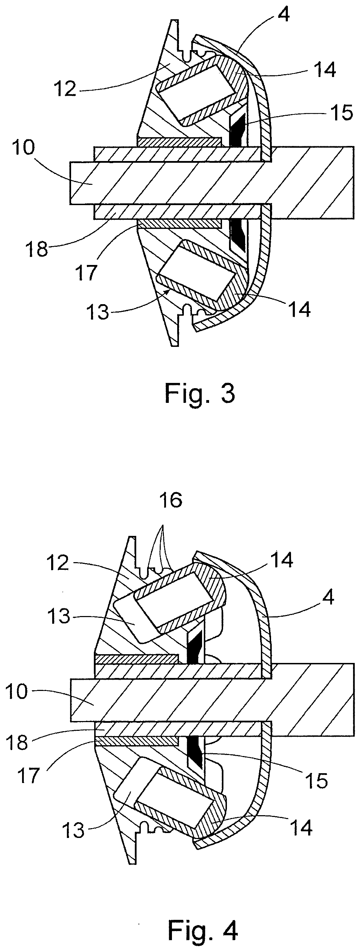

As can be seen in Figures 2, 3 and 4, the mobile disc (12) of the driving pulley (1) has on its outer face a series of housings (13) inclined in diverging directions and in which there are housed respective masses (14) that can be moved inertially against a curved bell-shaped cover (4) rotating integrally with the drive shaft (10) depicted in Figures 3 and 4.

As can be seen in Figure 2, the housings (13) and masses (14) have a non-cylindrical configuration, in this case a trapezoidal section with rounded edges, and ending at the front or projecting end in a rounded spherical cap-like configuration forming the contact surface with the inner surface of the bell-shaped cover (4).

When the drive shaft (10) is not rotating or is rotating at a low speed, the mobile disc (12) of the driving pulley remains close to the bell-shaped cover (4) and the masses (14) remain inside the respective housings (13).

As the rotational speed of the drive shaft (10) gradually increases, the masses (14) gradually project due to their own inertia from the respective housings (13), coming into contact with the inner surface of the bell-shaped cover (4) and causing the mobile disc (12) to move closer to the stationary disc of the driving pulley (1) due to the inclined and diverging arrangement of said masses.

As can be seen in said Figures 3 and 4, the driving pulley comprises inside the bell-shaped cover (4) a fan (15) for cooling the system and expelling possible particles that get into the space comprised between the mobile disc (12) and the bell-shaped cover (4), keeping the area in which the masses (14) come into contact with said bell-shaped cover (4) clean.

Additionally, as can be seen in Figures 3 and 4 the mobile disc (12) of the driving pulley (1) comprises on its outer face grooves (16) on the perimeter thereof to help dissipate the heat generated by the different parts associated with same rubbing against one another.

In the example shown in said Figures 3 and 4, the mobile disc (12) of the driving pulley (1) is mounted by means of arranging a bushing (17) on a bolt (18) treated with titanium nitride in order to achieve high hardness and a low coefficient of friction during axial movement of said mobile disc.

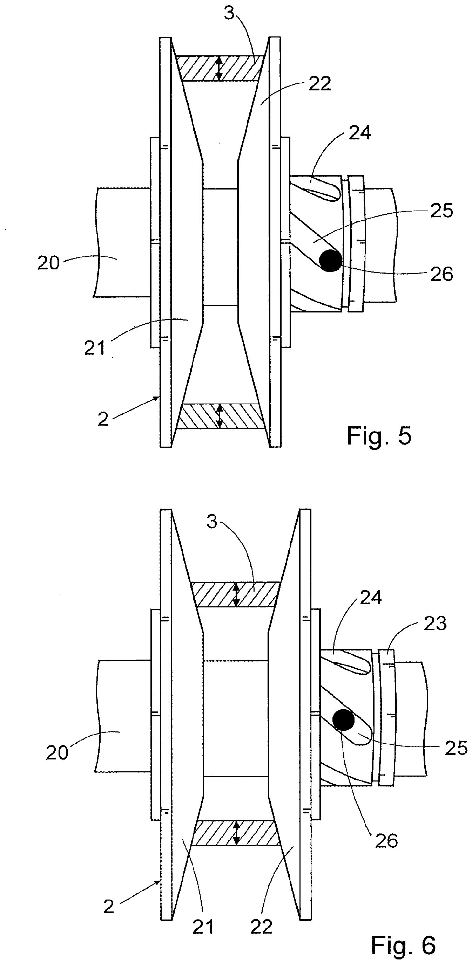

The example shown in Figures 5 and 6 shows the driven pulley (2) mounted on an output shaft (20) and formed by a stationary disc (21) and a mobile disc (22) having, for the purpose of mounting with the possibility of axial movement with respect to the output shaft (20), a tubular neck (23) provided with oblique notches (24, 25) with different angles of inclination for the optional insertion of lugs (26) in one group of notches or the other for integrally securing same to the output shaft (20).

The tubular neck (23) is detachable and is screw mounted on the mobile disc (22) of the driven pulley (2).

When the mobile disc (22) moves as a result of its own inertia with respect to the lugs (26), being guided on same by means of the notches (24) or (25), two limit working positions of the mobile disc which are further away from or closer to the stationary disc (21) of the driven pulley are achieved by varying the radius of rotation defined by the belt (3) in its support on the driven pulley (2).

As previously discussed, the mobile disc (22) of the driven pulley (2) will be aided by an elastic element such as a spring or the like, not depicted, which tends to move it towards the stationary disc of the driven pulley.

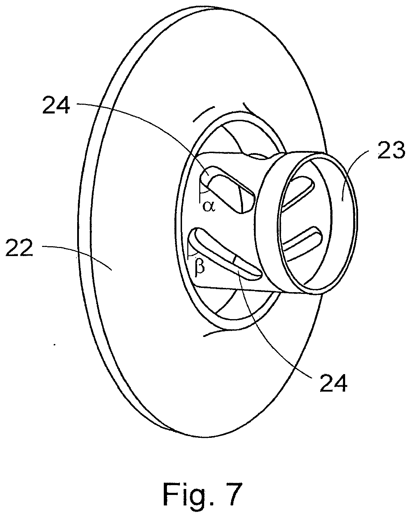

Figure 7 shows the mobile disc (22) of the driven pulley (2) and the tubular neck (23) provided with two sets of alternating notches (24) with different angles of inclination (α, β).

## Claims

1. An axial transmission system comprising:
- a driving pulley (1), mounted on a drive shaft (10), comprising a stationary disc (11) secured to said drive shaft (10) and a mobile disc (12) axially moveable wherein an outer face of said mobile disc (12) has a series of housings (13) inclined with respect to a direction vertical or perpendicular to the axis of rotation of the device and containing masses (14) that can be moved inertially against a cover (4) rotating integrally with the drive shaft (10);
- a driven pulley (2), mounted on an output shaft (20), comprising a stationary disc (21) secured to said output shaft (20) and a mobile disc (22) moveable in the axial direction as a result of its own inertia with respect to the output shaft (20); and
- a belt (3) that associates the driving and driven pulleys (1, 2) in rotation; and wherein the masses (14) have a projecting end in a rounded spherical cap-like configuration forming a contact surface with the inner surface of the cover (4), and wherein the cover (4) is rounded in a bell-shaped configuration;
**characterized in that** the housings (13) and the masses (14) have a trapezoidal configuration with rounded edges defining means for guiding the masses (14) in the axial direction, and preventing the masses (14) from rotating inside their respective housings (13).

2. The axial transmission system according to claim 1, **characterized in that** the driving pulley (1) comprises inside the bell-shaped cover (4) a fan (15) that helps cool the system.

3. The axial transmission system according to claim 2, **characterized in that** the mobile disc (11) of the driving pulley (1) comprises cooling grooves (16) on the perimeter thereof.

4. The axial transmission system according to claim 1, **characterized in that** the means for movement in the axial direction with respect to the output shaft (20) of the mobile disc (22) of the driven pulley (2) comprise a tubular neck (23) mounted on the output shaft and provided with two groups of oblique notches (24, 25), with different angles of inclination, for optionally inserting lugs (26) for integrally securing same to said output shaft (20).

## Patentansprüche

1. Axiales Übertragungssystem, umfassend:
- eine treibende Riemenscheibe (1), die an einer Antriebswelle (10) montiert ist, umfassend eine stationäre Scheibe (11), die an der Antriebswelle (10) befestigt ist, und eine bewegliche Scheibe (12), die axial beweglich ist, wobei eine Außenfläche der beweglichen Scheibe (12) eine Reihe von Aufnahmen (13) aufweist, die in Bezug auf eine Richtung vertikal oder senkrecht zu der Drehachse der Vorrichtung geneigt sind und Massen (14) enthalten, die träge gegen eine Abdeckung (4) bewegt werden können, die sich integral mit der Antriebswelle (10) dreht;
- eine getriebene Riemenscheibe (2), die an einer Abtriebswelle (20) montiert ist, umfassend eine stationäre Scheibe (21), die an der Abtriebswelle (20) befestigt ist, und eine bewegliche Scheibe (22), die aufgrund ihrer eigenen Trägheit in Bezug auf die Abtriebswelle (20) in der axialen Richtung beweglich ist, und
- einen Riemen (3), welcher die treibende und die getriebene Riemenscheibe (1, 2) in Rotation miteinander verbindet; und
wobei die Massen (14) ein vorstehendes Ende in einer abgerundeten, halbkugelförmigen, kappenartigen Konfiguration haben, die eine Kontaktfläche mit der Innenfläche der Abdeckung (4) ausbildet, und wobei die Abdeckung (4) in einer glockenförmigen Konfiguration abgerundet ist;
**dadurch gekennzeichnet, dass** die Aufnahmen (13) und die Massen (14) eine trapezförmige Konfiguration mit abgerundeten Kanten aufweisen, die Mittel zum Führen der Massen (14) in der axialen Richtung definieren und verhindern, dass sich die Massen (14) innerhalb ihrer jeweiligen Aufnahmen (13) drehen.

2. Axiales Übertragungssystem nach Anspruch 1, **dadurch gekennzeichnet, dass** die treibende Riemenscheibe (1) innerhalb der glockenförmigen Abdeckung (4) einen Lüfter (15) umfasst, der zur Kühlung des Systems beiträgt.

3. Axiales Übertragungssystem nach Anspruch 2, **dadurch gekennzeichnet, dass** die bewegliche Scheibe (11) der treibenden Riemenscheibe (1) an ihrem Umfang Kühlnuten (16) umfasst.

4. Axiales Übertragungssystem nach Anspruch 1, **dadurch gekennzeichnet, dass** die Mittel zur Bewegung in der axialen Richtung in Bezug auf die Abtriebswelle (20) der mobilen Scheibe (22) der getriebenen Scheibe (2) einen rohrförmigen Hals (23) umfassen, der an der Abtriebswelle montiert ist und mit zwei Gruppen von schrägen Ausnehmungen (24, 25) mit unterschiedlichen Neigungswinkeln bereitgestellt ist, um gegebenenfalls Ansätze (26) einzusetzen, um diese integral an der Abtriebswelle (20) zu befestigen.

## Revendications

1. Système de transmission axiale comprenant :
- une poulie motrice (1), montée sur un arbre d'entraînement (10), comprenant un disque fixe (11) fixé audit arbre d'entraînement (10) et un disque mobile (12) déplaçable axialement dans lequel une face externe dudit disque mobile (12) a une série de logements (13) inclinés par rapport à une direction verticale ou perpendiculaire à l'axe de rotation du dispositif et contenant des masses (14) qui peuvent être déplacées de manière inertielle contre un capot (4) tournant intégralement avec l'arbre d'entraînement (10) ;
- une poulie entraînée (2), montée sur un arbre de sortie (20), comprenant un disque fixe (21) fixé audit arbre de sortie (20) et un disque mobile (22) déplaçable dans la direction axiale suite à sa propre inertie par rapport à l'arbre de sortie (20) ; et
- une courroie (3) qui associe en rotation les poulies motrice et entraînée (1, 2) ; et
dans lequel les masses (14) ont une extrémité saillante dans une configuration en forme de capuchon sphérique arrondi formant une surface de contact avec la surface interne du capot (4), et dans lequel le capot (4) est arrondi dans une configuration en forme de cloche ;
**caractérisé en ce que** les logements (13) et les masses (14) ont une configuration trapézoïdale à bords arrondis définissant des moyens pour guider les masses (14) dans la direction axiale, et empêchant les masses (14) de tourner à l'intérieur de leurs logements respectifs (13).

2. Système de transmission axiale selon la revendication 1, **caractérisé en ce que** la poulie motrice (1) comprend à l'intérieur du capot en forme de cloche (4) un ventilateur (15) qui aide à refroidir le système.

3. Système de transmission axiale selon la revendication 2, **caractérisé en ce que** le disque mobile (11) de la poulie motrice (1) comprend des rainures de refroidissement (16) sur son périmètre.

4. Système de transmission axiale selon la revendication 1, **caractérisé en ce que** les moyens de mouvement dans la direction axiale par rapport à l'arbre de sortie (20) du disque mobile (22) de la poulie entraînée (2) comprennent un col tubulaire (23) monté sur l'arbre de sortie et pourvu de deux groupes d'encoches obliques (24, 25), avec différents angles d'inclinaison, pour l'insertion éventuelle d'ergots (26) pour la fixation de ceux-ci en un seul bloc audit arbre de sortie (20).
